**Europäisches Patentamt**

**European Patent Office**

**Office européen des brevets**

(19)

(11) Veröffentlichungsnummer: **0 254 045**
**B1**

(12)

# EUROPÄISCHE PATENTSCHRIFT

(45) Veröffentlichungstag der Patentschrift:
**12.12.90**

(51) Int. Cl.⁵: **H01S 3/03**

(21) Anmeldenummer: **87108923.1**

(22) Anmeldetag: **22.06.87**

(54) **Gaslaser mit Hochfrequenzanregung.**

(30) Priorität: **16.07.86 DE 8619083 U**

(43) Veröffentlichungstag der Anmeldung:
**27.01.88 Patentblatt 88/4**

(45) Bekanntmachung des Hinweises auf die Patenterteilung:
**12.12.90 Patentblatt 90/50**

(84) Benannte Vertragsstaaten:
**BE CH DE FR GB IT LI NL**

(56) Entgegenhaltungen:
**EP-A- 0 152 084**

(73) Patentinhaber: **Rofin-Sinar Laser GmbH,
Berzeliusstrasse 87, D-2000 Hamburg 74(DE)**

(72) Erfinder: **Martinen, Hinrich, Dipl.-Phys., Lindenstrasse 6,
D-2085 Quickborn(DE)**
Erfinder: **Simonsson, Samuel, Dipl.-Ing., Luhering 23,
D-2090 Winsen(DE)**
Erfinder: **Wirth, Peter, Dr.-Dipl.-Phys., Birkengrund 1,
D-2090 Winsen(DE)**

(74) Vertreter: **Glawe, Delfs, Moll & Partner Patentanwälte,
Postfach 26 01 62 Liebherrstrasse 20,
D-8000 München 26(DE)**

## Beschreibung

Die Erfindung betrifft einen Gaslaser mit Hochfrequenzanregung mit mindestens einem Laserrohr, an dem außen mindestens ein Elektrodenpaar für die Hochfrequenzanregung angebracht ist, und mit mindestens einem Zuführungsanschluß und einem Abführungsanschluß für das Gas (z.B. EP-A 0 152 084).

Bei solchen Gaslasern wird das Laserrohr von einem Gas bzw. Plasma durchströmt, das durch die Hochfrequenz angeregt wird. Die Hochfrequenzanregung versetzt dabei das Gas in einen solchen Zustand, daß Laserwirkung zwischen entsprechenden Spiegeln auftreten kann. Dabei erwärmt sich das Gas durch die Hochfrequenzanregung sehr stark, so daß es gekühlt werden muß, was durch einen entsprechenden Kreislauf geschieht, bei dem das Gas auch an einem Wärmeaustauscher vorbeigeführt wird.

An den Stellen, an denen das Gas zugeführt und abgeführt wird, sind Blöcke aus Metall angeordnet, in denen das eigentliche Laserrohr, das meistens aus Quarzglas besteht, eingesetzt ist. Man ist bestrebt, den Abstand zwischen den Elektrodenpaaren und diesen Blöcken möglichst klein zu machen, damit der Laser kompakte Außenabmessungen erhält. Außerdem wird hier zumindest beim Abführungsanschluß auf diese Weise der Vorteil erreicht, daß die heiße Gasstrecke zwischen den Elektroden und dem Abführungsanschluß möglichst klein wird. Dies ist wesentlich, da das heiße Gas oder Plasma in diesem Bereich nicht mehr durch die Hochfrequenz angeregt wird, aber wegen seiner hohen Temperatur nicht mehr zu optimaler Laseraktivität führt. Ist die Temperatur in diesem Bereich sehr hoch, d.h. höher als ungefähr 500 K, so kann hier sogar Absorption der Laserleistung stattfinden.

Macht man nun aber, wie dies aus den beiden genannten Gründen an sich wünschenswert ist, die Abstände zwischen den Elektroden und den normalerweise aus Metall bestehenden Abführungsblöcken sehr klein, so treten parasitäre Entladungen über das Gas bzw. Plasma zwischen den Elektroden und dem Block auf. Diese parasitären und schlecht zu kontrollierenden Entladungen möchte man aber auf jeden Fall vermeiden. Bisher war es nur bekannt, den Abstand zwischen Elektrodenpaaren oder Abführungsblöcken zu erhöhen, was aber zum genannten Nachteil der längeren Strecke heißen Gases führt. Werden andererseits die Abführungsblöcke aus Keramik oder ähnlichem Material hergestellt, so wird die ganze Anlage sehr teuer.

Die Aufgabe der Erfindung besteht darin, einen Gaslaser der eingangs genannten Art zu schaffen, bei dem der Abstand zwischen den Elektrodenpaaren und dem Abführungsanschluß kürzer gemacht werden kann, ohne daß das Gerät deswegen teurer wird oder Anlaß zu parasitären Entladungen gibt.

Die erfindungsgemäße Lösung besteht darin, daß zwischen dem Elektrodenpaar und dem Abführungsanschluß eine dielektrische Scheibe auf dem Rohr angeordnet ist, die sich im wesentlichen senkrecht zur Rohrachse erstreckt.

Durch diese Scheibe tritt die erstaunliche Wirkung auf, daß das Streufeld am zum Abführungsblock gerichteten Ende der Elektroden gebündelt oder kurzgeschlossen wird, so daß es nicht oder in nur noch unschädlichem Maße bis zum Abführungsblock gelangt. Die erwähnten parasitären Entladungen können dabei nicht auftreten, obwohl der Abstand zwischen Elektrodenpaar und Abführungsblock kleiner gemacht werden kann, was wie gesagt zu einem kompakteren Laseraufbau, vor allen Dingen aber einer kürzeren Strecke mit heißem Plasma bzw. Gas führt.

Durch die dielektrische Scheibe wird also das Streufeld des Elektrodenrandes auf einen Bereich, der näher am Elektrodenrand liegt, konzentriert. Dabei hat es sich als besonders zweckmäßig erwiesen, wenn das Material der Scheibe eine Dielektrizitätskonstante von ungefähr 2 bis 4 hat.

Wenn das Material der Scheibe niedrige dielektrische Verluste hat, so wird die Gefahr vermieden, daß sich die Scheibe durch die Hochfrequenzleistung beim Betrieb des Lasers erwärmt. Als besonders vorteilhaft hat es sich erwiesen, wenn der Verlustfaktor tg δ kleiner ist als $10^{-3}$.

Es hat sich weiter als vorteilhaft erwiesen, wenn der Abstand der Scheibe vom Elektrodenpaar mindestens ungefähr 1/3 des Durchmessers des Laserrohrs beträgt.

Damit der Laseraufbau trotz der zusätzlichen Scheibe in einer Richtung senkrecht zur Rohrachse nicht unnötig groß wird, kann vorgesehen werden, daß die Scheibe Ausnehmungen an ihrem Rand zum Aufnehmen von Befestigungselementen der Elektroden aufweist. Daß hier möglicherweise bis in verhältnismäßig große Nähe zum Rohr dielektrisches Material fehlt und für die erfindungsgemäße Wirkung nicht mehr zur Verfügung steht, wird dann dadurch wettgemacht, daß in diese Ausnehmungen die Befestigungselemente eingreifen, die ebenfalls die genannten Materialeigenschaften haben können bzw. sollten.

Die erfindungsgemäße Scheibe wirkt besonders vorteilhaft beim leistungsüberhöhten Pulsen von Lasern, dem sogenannten Superpulsen.

Die Erfindung wird im folgenden beispielsweise anhand von vorteilhaften Ausführungsformen unter Bezugnahme auf die beigefügten Zeichnungen beschrieben. Es zeigen:

Fig. 1 das Prinzip eines Gaslasers mit Hochfrequenzanregung;

Fig. 2 die erfindungsgemäße Anordnung in Draufsicht; und

Fig. 3 u. 4 Ausführungsformen der Scheibe der Erfindung.

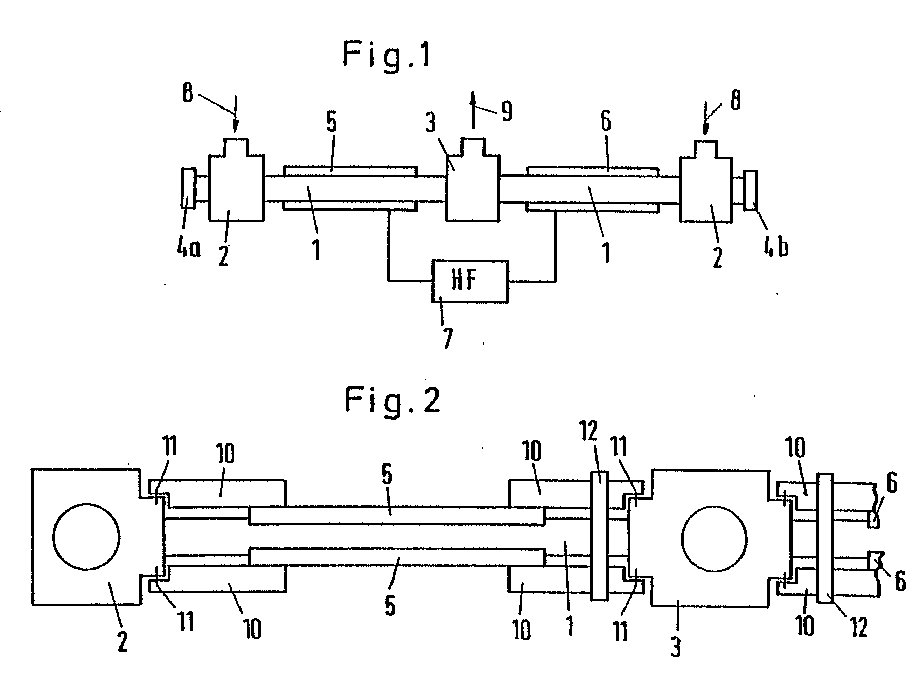

In Fig. 1 ist ein Gaslaser gezeigt, dessen Laserrohr (1) aus mehreren Stücken besteht, die in Einlaßblöcke (2) für das Gas und einen Auslaßblock (3) für das Gas eingepaßt sind. An den Enden des Laserrohrs (1) befinden sich die Laserspiegel (4a u. 4b). Direkt auf das Laserrohr (1), das z.B. aus Quarzglas bestehen kann, sind Elektrodenpaare (5, 6) angebracht, die über eine Hochfrequenzquelle (7) mit Hochfrequenz beaufschlagt werden.

Das Gas wird in die Zuführungsblöcke (2) in Richtung der Pfeile (8) eingeführt und strömt von dort über die entsprechenden Stücke des Laserrohres (1) zum Auslaßblock (3), den es in Richtung des Pfeiles (9) verläßt. Anschließend wird das Gas dann in einem Wärmeaustauscher gekühlt und mit einer Pumpe wieder bei (8) in den Laser eingeführt.

Beim Durchwandern der Entladungsstrecke im Bereich der Elektroden (5 bzw. 6) erwärmt sich das Gas sehr stark. Daher sollte der Abstand zwischen den Elektroden (5, 6) und dem Auslaßblock (3) möglichst klein sein.

Die Anordnung der Fig. 1 stellt nur ein einfaches Beispiel und lediglich den prinzipiellen Aufbau vor. Es können an einem Rohr gleichzeitig noch mehr Entladungsstrecken bzw. Elektroden vorgesehen sein, wobei dann auch die Zahl der Blöcke (2, 3) entsprechend erhöht werden würde. Außerdem können mehrere Laserrohre in der bekannten Art eines gefalteten Lasers nebeneinander angeordnet werden.

In Fig. 2 ist nun ein tatsächlicher Aufbau gezeigt. Im linken Teil der Figur ist ein Laserrohr (1) zwischen einem Zuführungsblock (2) und einem Abführungsblock (3) angeordnet. Die das Laserrohr (1) teilweise umschließenden Elektroden (5) werden von an den Blöcken befestigten, im wesentlichen einen rechteckigen Querschnitt aufweisenden Haltern (10) gehalten. Diese Halter (10) sind an den Blöcken (2, 3) durch bei (11) angedeutete Befestigungsmittel wie z.B. Schrauben befestigt; sie bestehen vorteilhafterweise aus einem Material mit hoher Dielektrizitätskonstante, auf jeden Fall aber mit kleinem Verlustfaktor. Zwischen den Elektroden (5) und dem Abführungsblock (3) ist nun auf das Laserrohr (1) eine dielektrische Scheibe (12) aufgesteckt, die wegen ihrer Dielektrizitätskonstante sozusagen einen Kurzschluß für das Streufeld des Randes der Elektroden (5) darstellt.

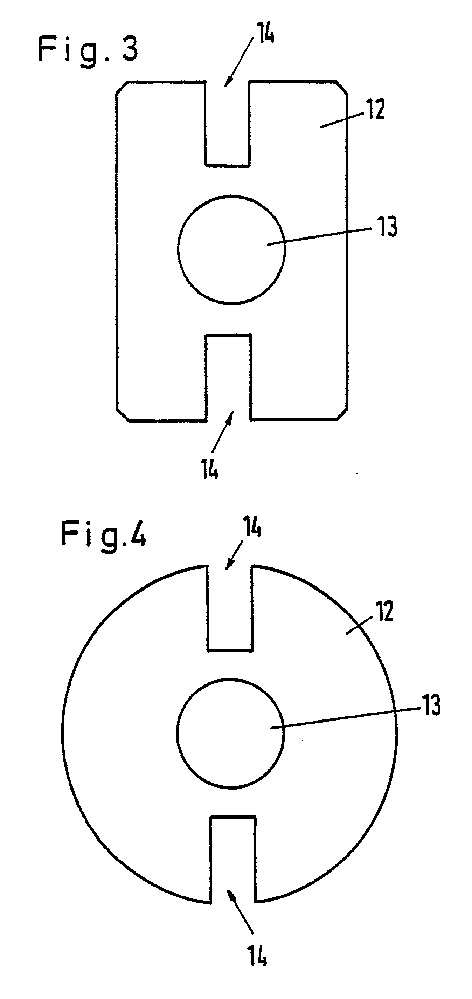

In Fig. 3 und 4 sind zwei Formen der Scheibe, nämlich eine im wesentlichen rechteckige Scheibe mit abgerundeten Ecken bzw. eine kreisrunde Scheibe dargestellt. Die Scheiben (12) weisen dabei ein mittiges Loch (13) auf, dessen Durchmesser dem Außendurchmesser des Laserrohres (1) entspricht. Außerdem weisen sie zwei schlitzförmige Ausnehmungen (14) auf, in denen die Halter (10) für die Elektroden (5, 6) aufgenommen werden können.

Wie man noch in Fig. 2 erkennt, ist dort nicht nur eine Scheibe (12) vorgesehen, sondern rechts zwischen dem Abführungsblock (3) und dem nächsten Satz (6) von Elektroden ebenfalls.

## Patentansprüche

1. Gaslaser mit Hochfrequenzanregung mit mindestens einem Laserrohr, an dem außen mindestens ein Elektrodenpaar für die Hochfrequenzanregung angebracht ist, und mit mindestens einem Zuführungsanschluß und einem Abführungsanschluß für das Gas, dadurch gekennzeichnet, daß zwischen dem Elektrodenpaar (5, 6) und dem Abführungsanschluß (3) eine dielektrische Scheibe (12) auf dem Rohr (1) angeordnet ist, die sich im wesentlichen senkrecht zur Rohrachse erstreckt.

2. Gaslaser nach Anspruch 1, dadurch gekennzeichnet, daß das Material der Scheibe (12) eine Dielektrizitätskonstante von ungefähr 2 bis 4 hat.

3. Gaslaser nach Anspruch 1 oder 2, dadurch gekennzeichnet, daß das Material der Scheibe (12) niedrige dielektrische Verluste hat.

4. Gaslaser nach Anspruch 3, dadurch gekennzeichnet, daß der Verlustfaktor tg $\delta$ kleiner ist als $10^{-3}$.

5. Gaslaser nach einem der Ansprüche 1 bis 4, dadurch gekennzeichnet, daß der Abstand der Scheibe (12) von dem Elektrodenpaar (5, 6) mindestens ungefähr 1/3 des Durchmessers des Laserrohrs (1) beträgt.

6. Gaslaser nach einem der Ansprüche 1 bis 5, dadurch gekennzeichnet, daß die Scheibe (12) Ausnehmungen (14) an ihrem Rand zum Aufnehmen von Befestigungselementen (10) der Elektroden (5, 6) aufweist.

## Claims

1. A gas laser with high-frequency stimulation, having at least one laser tube, to which at least one pair of electrodes for high-frequency stimulation is applied externally, and having at least one inlet connection and one outlet connection for the gas, characterised in that a dielectric plate (12) is disposed on the tube (1) between the pair of electrodes (5, 6) and the outlet connection (3), said plate (12) extending substantially perpendicular to the tube axis.

2. A gas laser according to claim 1, characterised in that the material of the plate (12) has a dielectric constant of approximately 2 to 4.

3. A gas laser according to claim 1 or 2, characterised in that the material of the plate (12) has low dielectric losses.

4. A gas laser according to claim 3, characterised in that the loss factor tg $\delta$ is lower than $10^{-3}$.

5. A gas laser according to any one of claims 1 to 4, characterised in that the distance of the plate (12) from the pair of electrodes (5, 6) is at least approximately 1/3 of the diameter of the laser tube (1).

6. A gas laser according to any one of claims 1 to 5, characterised in that the plate (12) has recesses (14) in its periphery to accomodate securing members (10) for the electrodes (5, 6).

## Revendications

1. Laser à gaz à excitation à haute fréquence, comprenant au moins un tube de laser, sur lequel est montée extérieurement au moins une paire d'électrodes pour l'excitation à haute fréquence, ainsi qu'au moins un raccord d'admission et un raccord d'évacuation pour le gaz, caractérisé en ce qu'il est monté sur le tube (1), entre la paire d'électrodes (5, 6) et le raccord de départ (3), un disque (12) diélectrique, qui s'étend dans une direction sensiblement perpendiculaire à l'axe du tube.

2. Laser à gaz selon la revendication 1, caractérisé en ce que la matière du disque (12) a une constante diélectrique d'environ 2 à 4.

3. Laser à gaz selon la revendication 1 ou 2, caractérisé en ce que la matière du disque (12) a de faibles pertes diélectriques.

4. Laser à gaz selon la revendication 3, caractérisé en ce que le facteur de perte tg $\delta$ est inférieure à $10^{-3}$.

5. Laser à gaz selon l'une quelconque des revendications 1 à 4, caractérisé en ce que la distance du disque (12) à la paire d'électrodes (5, 6) est au moins 1/3 environ du diamètre du tube de laser (1).

6. Laser à gaz selon l'une quelconque des revendications 1 à 5, caractérisé en ce que le disque (12) présente, sur le bord, des encoches (14) pour recevoir des éléments (10) de fixation des électrodes (5, 6).

Fig.1

Fig.2

Fig. 3

14

12

13

14

Fig.4

14

12

13

14